# EUROPÄISCHE PATENTSCHRIFT

(11) **EP 0 939 268 B1**
(45) Veröffentlichungstag und Bekanntmachung des Hinweises auf die Patenterteilung: **21.07.2004**
(21) Anmeldenummer: 99890068.2
(22) Anmeldetag: 25.02.1999
(51) Int. Cl.: F16L 47/00, F16L 47/02

(54) **Vorrichtung zum Verbinden miteinander nicht verklebbarer oder verschweissbarer Kunststoffrohre**
Device for coupling plastic pipes which are not able to be glued or welded to each other
Dispositif pour raccorder des tuyaux en matière plastique non collables ou soudables l'un à l'autre

(30) Priorität: 25.02.1998 AT 33898
(43) Veröffentlichungstag der Anmeldung: 01.09.1999
(73) Patentinhaber: KE-KELIT Kunststoffwerk Gesellschaft m.b.H., A-4017 Linz (AT)
(72) Erfinder: Rametsteiner, Karl, 4040 Linz (AT)
(74) Vertreter: Hübscher, Gerhard, Dipl.-Ing.

(56) Entgegenhaltungen:
- DE-U- 8 900 879
- FR-A- 2 729 206
- GB-A- 876 408
- GB-A- 949 039
- GB-A- 1 503 328

## Beschreibung

Die Erfindung bezieht sich auf eine Vorrichtung zum Verbinden miteinander nicht verklebbarer oder verschweißbarer Kunststoffrohre mit einem mit Außenringrillen versehenen Verbindungsrohrstück aus Metall, auf das von beiden Seiten her die Enden eines einen und eines anderen Kunststoffrohrabschnittes aufgebracht sind, wobei die Außenringrillen an dem einen Ende von dem einen und am anderen Ende von dem anderen Rohrwerkstoff der Kunststoffrohrabschnitte verbindend ausgefüllt sind (GB 876 408 A).

Im Leitungsbau kann es vorkommen, daß Rohre zusammenstoßen bzw. zusammengefügt werden müssen, die aus verschiedenem Kunststoff bestehen, wobei der Kunststoff des einen Rohres mit jenem des anderen Rohres weder verklebbar noch verschweißbar ist. Beispielsweise besteht dabei das eine Rohr aus Polypropylen und das andere aus Polyvinylchlorid, wobei es eine weitere Anzahl verschiedener Kunststoffe gibt, die in sich weder durch Schweißen noch durch Kleben verbunden werden können.

Es ist bereits ein Verbindungsstück zur Verbindung zweier verschiedener Kunststoffrohre bekannt (EP 611 276 A1), das aus zwei Kunststoffstücken mit verschiedenen Härten besteht, wobei das aus weniger festem Werkstoff hergestellte Stück eine Muffe zur Schweißverbindung mit einem Leitungsrohr bildet. Es ist auch schon ein Übergangsstück (EP 531 709 A2) bekannt, bei dem Kunststoffrohre und Metallrohre aneinander angeschlossen werden, wobei die Art des Kunststoffes überhaupt in Frage gestellt ist. Die Verbindung von Armaturen aus Metall mit Kunststoffrohren ist ebenfalls bekannt (EP 461 308 A1), ebenso wie es nicht mehr neu ist, Verbindungsstücke mit Außenringrillen, die mit Kunststoff ausgespritzt sind, vorzusehen.

Aus der FR 2 729 206 A ist eine Vorrichtung zum Verbinden zwischen einem festen Rohrstück und einem Schlauch bekannt, wobei der Schlauch mittels eines Außenringrillen des Rohrstückes ausfüllenden Klebstoffes am Rohrstück festgeklebt und mit einer Metallmanschette gegen ein Abziehen vom Rohrstück gesichert ist.

Der Erfindung liegt dagegen die Aufgabe zugrunde, eine verhältnismäßig einfach herstellbare Verbindung von nicht verschweißbaren oder verklebbaren Kunststoffen im Rohrleitungsbau zu schaffen.

Die Erfindung löst diese Aufgabe dadurch, daß die von beiden Seiten her stirnseitig stoßend auf das Verbindungsrohrstück aufgebrachten Enden der Kunststoffrohrabschnitte eine auf das Verbindungsrohrstück aufgespritzte Außenhülle bilden.

Durch dieses Zwischenstück werden die beiden zu verbindenden, aber nicht verkleb- bzw. verschweißbaren Kunststoffrohre aneinander festgehalten, wodurch die gewünschte Verbindung erreicht wird. Als Werkstoff für das Zwischenstück bieten sich Metalle, z. B. Messing, Edelstahl u. dgl., oder nicht im Rahmen der Erfindung liegende hochfeste Kunststoffe, nämlich Polyamid, Polyimid, glasfaser- oder carbonfaserverstärkte Thermoplaste und Duroplaste, z.B. Epoxid, an. Eine besonders gute Verbindung des Zwischenstückes mit den Kunststoffabschnitten wird dadurch erreicht, daß das innerhalb der Abschnitte angeordnete Zwischenstück wenigstens im Bereich des einen Abschnittendes auch innenseitig einen Überzug mit dem Werkstoff des betreffenden Abschnittes besitzt, wobei dieser mit wenigstens einer Ringrille des Zwischenstückes verhakt ist.

Zur Erhöhung der Dichtheit der Verbindung kann das innerhalb der Kunststoffabschnitte angeordnete Zwischenstück wenigstens im Bereich ihres einen Rohrendes auch innenseitig einen Überzug mit dem Werkstoff des betreffenden Abschnittes besitzen, wobei dieser mit wenigstens einer Ringrille des Zwischenstückes verhakt ist.

Eine größere Dichtheit wird selbstverständlich erreicht, wenn die Stoßflächen der beiden Kunststoffrohrabschnitte eine ineinandergreifende ringförmige Profilierung aufweisen, so daß sich eine Labyrinthdichtung ergibt. Ferner ist es gerade beim Leitungsbau günstig, wenn die beiden Kunststoffrohrabschnitte gegen Relativverdrehung verzahnt sind.

In der Zeichnung ist der Erfindungsgegenstand beispielsweise dargestellt, und zwar zeigen
Fig. 1 eine mögliche Rohrverbindung im Längsschnitt,
Fig. 2 einen Teil einer ähnlichen Ausführung in gleicher Darstellungsweise,
Fig. 3 eine Ausführung, bei der das Zwischenstück auch innenseitig mit einem Überzug aus den beiden Rohrenden aufweist, und
Fig. 4 eine geschlossene Rohrverbindung in Ansicht.

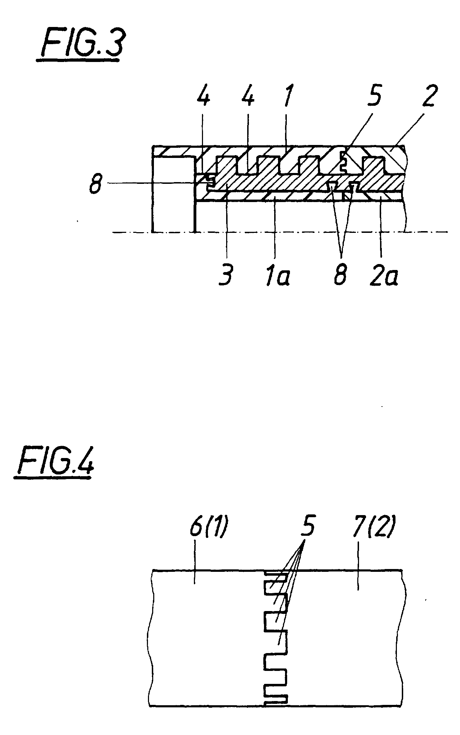

Zur Verbindung zweier Kunststoffrohre 6, 7 deren Werkstoff miteinander weder verschweiß- noch verklebbar ist, dient ein Zwischenstück 3, das aus Metall besteht. Gemäß eines nicht im Rahmen der Erfindung liegenden Ausführungsbeispiels kann das Zwischenstück 3 aus einem hochfesten, stabilen Kunststoff bestehen. Das Zwischenstück 3 weist außenseitig eine als Ringrillen 4 ausgebildete Querprofilierung auf, die vom Werkstoff der beiden Kunststoffabschnitte 1, 2 ausgefüllt sind, wodurch eine gegenseitige Längsverschiebung ausgeschlossen ist. Die Herstellung erfolgt in der Weise, daß zunächst der Kunststoffabschnitt 1, dessen Werkstoff einen wesentlich höheren Schmelzpunkt besitzt, aufgespritzt wird, wonach dann der Kunststoffabschnitt 2, dessen Werkstoff einen niedrigeren Schmelzpunkt aufweist, ebenfalls aufgespritzt wird. Um eine besonders dichte Verbindung der Kunststoffrohrabschnitte 1, 2 zu erreichen, weisen die aneinander stoßenden Stirnflächen dieser Teile gemäß Fig. 3 und 4 eine ineinandergreifende Profilierung 5 auf, wobei die Profilierung (Fig. 4) sich über den ganzen Rohrumfang erstrecken kann, so daß Relatiwerdrehungen sicher vermieden werden.

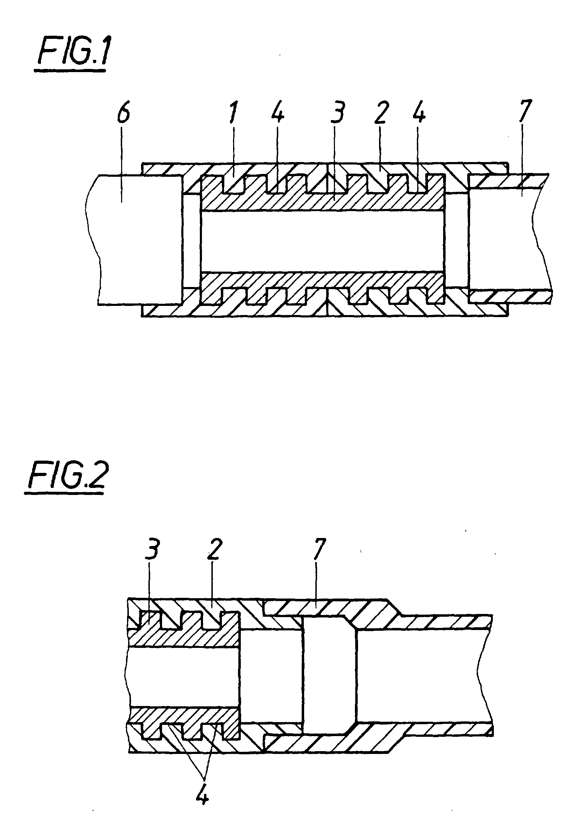

Die zu verbindenden Leitungsrohre 6, 7 können ein muffenförmiges Ende oder ein einfaches Ende ohne jede Profilierung aufweisen. Selbstverständlich ist es auch möglich, beidseitig einfache Rohrenden vorzusehen (Fig. 2).

Gemäß Fig. 3 ist das Zwischenstück 3 innenseitig mit einem Überzug der Abschnitte 1a, 2a versehen, wobei diese Innenteile der Abschnitte 1a, 2a mit dem Zwischenstück 3 durch eine Schwalbenschwanzprofilierung 8 verhakt sind

Fig. 4 läßt eine fertige Verbindung zweier in der Kunststoffhülle des Verbindungsstückes eingesteckten Leitungsrohre 6, 7 erkennen, wobei sichtbar ist, daß die beiden Kunststoffrohre 1, 2 bzw. deren Kunststoffabschnitte 1, 2 durch eine Art Verzahnung gegen Relativverdrehung gesichert sind.

## Patentansprüche

1. Vorrichtung zum Verbinden miteinander nicht verklebbarer oder verschweißbarer Kunststoffrohre (6, 7) mit einem mit Außenringrillen (4) versehenen Verbindungsrohrstück (3) aus Metall, auf das von beiden Seiten her die Enden eines einen und eines anderen Kunststoffrohrabschnittes (1, 2) aufgebracht sind, wobei die Außenringrillen (4) an dem einen Ende von dem einen und am anderen Ende von dem anderen Rohrwerkstoff der Kunststoffrohrabschnitte (1, 2) verbindend ausgefüllt sind, **dadurch gekennzeichnet, daß** die von beiden Seiten her stirnseitig stoßend auf das Verbindungsrohrstück (3) aufgebrachten Enden der Kunststoffrohrabschnitte (1, 2) eine auf das Verbindungsrohrstück (3), aufgespritzt Außenhülle bilden.

2. Vorrichtung nach Anspruch 1, **dadurch gekennzeichnet, daß** das innerhalb der Kunststoffrohrabschnitte (1, 2) angeordnete Verbindungsrohrstück (3) wenigstens im Bereich des einen Rohrendes (7) auch innenseitig einen Überzug mit dem Werkstoff des betreffenden Abschnittes (1, 2) besitzt, wobei dieser mit wenigstens einer Ring-rille (8) des Verbindungsrohrstückes (3) verhakt ist.

3. Vorrichtung nach Anspruch 1 oder 2, **dadurch gekennzeichnet, daß** die Stirn- bzw. Stoßflächen der beiden Kunststoffrohrabschnitte (1, 2) eine ineinandergreifende ringförmige Profilierung (5) aufweisen.

4. Vorrichtung nach den Ansprüchen 1 bis 3, **dadurch gekennzeichnet, daß** die beiden Kunststoffrohrabschnitte (1, 2) gegen Relativverdrehung verzahnt sind.

5. Vorrichtung nach den Ansprüchen 1 bis 3, **dadurch gekennzeichnet, daß** jeweils der Abschnitt (1) mit dem höheren Werkstoffschmelzpunkt vor dem Abschnitt (2) mit dem niedrigeren Werkstoffschmelzpunkt aufgebracht, vorzugsweise aufgespritzt ist.

## Claims

1. A device for connecting plastic tubes (6, 7) which are non-stickable or weldable to one another to a metal connecting tubular member (3) which is provided with outer annular grooves (4) and on to which there are applied from both sides the ends of one and of another plastic tube portion (1, 2), the outer annular grooves (4) being connectingly filled at one end by the one tube material and at the other end by the other tube material of the plastic tube portions (1, 2), **characterised in that** the ends of the plastic tube portions (1, 2) applied from both sides to the connecting tube member (3) so as to abut the ends thereof form an outer covering sprayed on to the connecting tube member (3).

2. A device according to claim 1, **characterised in that** the connecting tube member (3) disposed inside the plastic tube portions (1, 2) has, at least in the region of one tube end (7), on the inside also a covering with the material of the relevant portion (1, 2), the same being hooked to at least one annular groove (8) of the connecting tube member (3).

3. A device according to claim 1 or 2, **characterised in that** the end faces or abutting faces of the two plastic tube portions (1, 2) have an inter-engaging annular profiling (5).

4. A device according to claims 1 to 3, **characterised in that** the two plastic tube portions (1, 2) are toothed against relative rotation.

5. A device according to claims 1 to 3, **characterised in that** each case the portion (1) having the higher material melting point is applied, preferably sprayed on, before the portion (2) having the lower material melting point.

## Revendications

1. Dispositif pour relier ensemble des tubes en matière synthétique (6, 7), non collables ou soudables, avec un élément de tube de liaison (3) en métal, muni de cannelures annulaires extérieures (4), sur lequel, depuis les deux côtés, les extrémités d'un premier tronçon et d'un autre tronçon, en matière synthétique (1, 2) sont appliquées, les cannelures annulaires extérieures (4), sur une première extrémité, étant comblées avec effet de liaison, par un premier matériau tubulaire et, à l'autre extrémité, par l'autre matériau tubulaire des tronçons de tubes en matière synthétique (1, 2), **caractérisé en ce que** les extrémités, appliquées depuis les deux côtés, en se touchant frontalement, sur l'élément de tube de liaison (3), des tronçons de tube en matière synthétique (1, 2) forment une gaine extérieure, rapportée par injection sur l'élément de tube de liaison (3).

2. Dispositif selon la revendication 1, **caractérisé en ce que** l'élément de tube de liaison (3), disposé à l'intérieur des tronçons de tube en matière synthétique (1, 2), comprend, au moins dans la zone d'une première extrémité de tube (7), également intérieurement, un revêtement effectué avec le matériau du tronçon (1, 2) concerné, celui-ci étant accroché à au moins une cannelure (8) de l'élément de tube de liaison (3).

3. Dispositif selon la revendication 1 ou 2, **caractérisé en ce que** les faces frontales, respectivement les faces de joint, des deux tronçons de tube en matière synthétique (1, 2), présentent un profilage (5), à forme annulaire, s'engageant l'un dans l'autre.

4. Dispositif selon les revendications 1 à 3, **caractérisé en ce que** les deux tronçons de tubes en matière synthétique (1, 2) sont dentés pour empêcher toute rotation relative.

5. Dispositif selon les revendications 1 à 3, **caractérisé en ce que**, chaque fois, le tronçon (1), ayant le point de fusion de matériau le plus élevé, est appliqué, de préférence, rapporté par injection, avant le tronçon (2), ayant le point de fusion de matériau le plus bas.
